# EUROPÄISCHE PATENTSCHRIFT

(11) **EP 4 083 330 B1**
(45) Veröffentlichungstag und Bekanntmachung des Hinweises auf die Patenterteilung: **21.08.2024**
(21) Anmeldenummer: 22178687.4
(22) Anmeldetag: 08.03.2017
(51) Int. Cl.: E02D 29/12

(54) **SCHACHTELEMENT**
SHAFT ELEMENT
ÉLÉMENT DE PUITS

(30) Priorität: 09.03.2016 DE 102016104333
(43) Veröffentlichungstag der Anmeldung: 02.11.2022
(62) Teilanmeldung aus: 17714400.3
(73) Patentinhaber: Buchstaller, Jürgen, 90475 Nürnberg (DE)
(72) Erfinder: Buchstaller, Jürgen, 90475 Nürnberg (DE)
(74) Vertreter: Hafner & Kohl PartmbB

(56) Entgegenhaltungen:
- DE-B3- 102012 013 618
- DE-U1- 29 914 656
- JP-A- 2000 121 740

## Beschreibung

Die Erfindung betrifft ein Schachtelement zur Ausbildung wenigstens eines Abschnitts eines Schachtbauwerks, umfassend einen einen Hohlraum begrenzenden Grundkörper.

Entsprechende Schachtelemente sind zur Ausbildung von Schachtbauwerken, welche z. B. einen Teil eines Ent- oder Versorgungsschachtsystems, d. h. z. B. einer Kanalisation, bilden, grundsätzlich aus der Druckschrift JP 2000 121 740 A bekannt.

Weiterhin ist bekannt, dass die Übertragung, d. h. das Senden und Empfangen, von Kommunikationssignalen durch entsprechende Schachtelemente bzw. Schachtbauwerke problematisch sein kann. Dies gilt insbesondere für unter der Erdoberfläche angeordnete Schachtelemente bzw. Schachtbauwerke. Ein bekanntes Problem betrifft konkret die Übertragung von Kommunikationssignalen zwischen einer unter der Erdoberfläche angeordneten Signalquelle und einem oberhalb der Erdoberfläche angeordneten Signalempfänger (oder umgekehrt); die Kommunikationssignale müssen hier durch das Schachtbauwerk respektive die dieses bildenden Schachtelemente übertragen werden.

Bei entsprechenden Signalquellen handelt es sich typischerweise um gesonderte, d. h. nicht baulich mit dem Schachtbauwerk verbundene, Sende- und/oder Empfangseinrichtungen, welche den in dem jeweiligen Schachtbauwerk herrschenden Umgebungsbedingungen ausgesetzt sind.

Der Erfindung liegt die Aufgabe zugrunde, ein demgegenüber verbessertes Schachtelement anzugeben.

Die Aufgabe wird insbesondere durch ein Schachtelement gemäß Anspruch 1 gelöst. Die hierzu abhängigen Ansprüche betreffen besondere Ausführungsformen des Schachtelements.

Das hierin beschriebene Schachtelement dient im Allgemeinen der Ausbildung eines Schachtbauwerks. Das Schachtbauwerk kann grundsätzlich zumindest abschnittsweise oberhalb oder zumindest abschnittsweise unterhalb der Erdoberfläche angeordnet oder ausgebildet sein. Das Schachtbauwerk kann z. B. einen Teil eines zumindest abschnittsweise oberhalb oder zumindest abschnittsweise unterhalb der Erdoberfläche verlaufenden Ent- oder Versorgungsschachtsystems bilden. Ein Beispiel für ein unterhalb der Erdoberfläche verlaufendes Ent- oder Versorgungsschachtsystem ist eine Kanalisation.

Das Schachtelement umfasst einen einen Hohlraum begrenzenden Grundkörper. Der Grundkörper hat typischerweise, jedoch nicht zwingend eine hohlzylindrische geometrische Grundform; denkbar sind jedoch auch andere, d. h. z. B. (viel)eckige geometrische Grundformen.

Je nach funktioneller bzw. konstruktiver Ausgestaltung des Schachtelements kann der Grundkörper z. B. aus unterschiedlichen Bau- oder Werkstoffen, insbesondere aus den Werkstoffgruppen Metalle, Keramiken, Kunststoffe, gebildet sein. Bevorzugt kann der Grundkörper aus einem, gegebenenfalls aushärtbaren und/oder gießfähigen, Baustoff, z. B. Beton, gebildet sein. Weiter bevorzugt kann der Grundkörper aus einem, insbesondere extrusions- bzw. spritzgießfähigen, thermoplastischen, gegebenenfalls polyolefinischen, Kunststoff, d. h. z. B. PA, PC, PE, PP, PS, gebildet sein. Selbstverständlich kann der Grundkörper unterschiedliche Grundkörperabschnitte aus unterschiedlichen Materialien umfassen.

In den Grundkörper des Schachtelements (im Weiteren "Grundkörper") ist eine Erfassungseinrichtung und eine der Erfassungseinrichtung zugeordnete, d. h. mit dieser datenmäßig gekoppelte, Übertragungseinrichtung integriert. Unter der Integration ist eine bauliche Verbindung der Erfassungseinrichtung bzw. der Übertragungseinrichtung mit dem Grundkörper zu verstehen. Die Erfassungseinrichtung bzw. die Übertragungseinrichtung ist, typischerweise vollständig, in einer Wandung des Grundkörpers des Schachtelements angeordnet oder ausgebildet. Die bauliche Verbindung kann (beschädigungs- bzw. zerstörungsfrei) lösbar bzw. nicht (beschädigungs- bzw. zerstörungsfrei) lösbar sein. In dem ersten Fall kann die Erfassungseinrichtung bzw. die dieser zugehörigen Komponenten, d. h. z. B. Erfassungselemente, respektive die Übertragungseinrichtung bzw. die dieser zugehörigen Komponenten, d. h. z. B. Übertragungselemente, (unmittelbar) von dem den Grundkörper bildenden Material umgeben sein; die Erfassungseinrichtung respektive die Übertragungseinrichtung kann z. B. mit dem den Grundkörper bildenden Material im Rahmen der Herstellung des Grundkörpers umgossen sein. In dem zweiten Fall kann die Erfassungseinrichtung bzw. die dieser zugehörigen Komponenten respektive die Übertragungseinrichtung bzw. die dieser zugehörigen Komponenten in hierfür vorgesehenen, insbesondere in einem freiliegenden oder freilegbaren, mithin zugänglichen, Bereich des Grundkörpers angeordneten oder ausgebildeten, z. B. durch Ausnehmungen in dem Grundkörper gebildeten, grundkörperseitigen Aufnahmebereichen angeordnet oder ausgebildet sein. Für das Beispiel eines eine hohlzylindrische Grundform aufweisenden Grundkörpers können entsprechende Aufnahmebereiche z. B. im Bereich einer äußeren und/oder inneren Mantelfläche und/oder im Bereich einer ringartigen bzw. förmigen Stirnfläche angeordnet oder ausgebildet sein. Ein entsprechender Aufnahmebereich kann über ein diesem zugeordnetes, z. B. klappenartiges, Verschlusselement (reversibel) verschließbar sein. In dem verschlossenen Zustand ist die in dem Aufnahmebereich aufgenommene Einrichtung vor äußeren Einflüssen geschützt, in dem offenen Zustand ist ein Zugriff auf die in dem Aufnahmebereich aufgenommene Einrichtung möglich.

Die Erfassungseinrichtung ist zur Erfassung wenigstens einer Erfassungsgröße eingerichtet. Bei einer vermittels der Erfassungseinrichtung erfassbaren Erfassungsgröße kann es sich um eine chemische und/oder physikalische Größe, d. h. z. B. Atmosphäre, Dichte, Druck, Feuchtigkeit, pH-Wert, Temperatur, etc., des Schachtelements und/oder eines innerhalb des durch den Grundkörper begrenzten Hohlraums, im Weiteren innerhalb eines das Schachtelement aufnehmenden Schachtbauwerks, strömenden (fluiden) Mediums und/oder in einer Umgebung um das Schachtelement handeln. Entsprechende chemische und/oder physikalische Größen lassen sich insbesondere für ein in dem durch den Grundkörper begrenzten Hohlraum befindliches (fluides) Medium, d. h. z. B. Abwasser, Gas, etc., erfassen. Für ein in dem durch den Grundkörper begrenzten Hohlraum strömendes (fluides) Medium lassen sich auch Strömungsparameter, d. h. z. B. die Strömungsgeschwindigkeit, erfassen. Bei einer vermittels der Erfassungseinrichtung erfassbaren Erfassungsgröße kann es sich auch um einen Pegel (Wasserstand) in dem durch den Grundkörper begrenzten Hohlraum, im Weiteren innerhalb eines das Schachtelement aufnehmenden Schachtbauwerks, handeln. Mithin lässt sich ein (veränderlicher) Pegel eines in dem durch den Grundkörper begrenzten Hohlraum befindlichen, in diesem z. B. auf- oder absteigenden, (fluiden) Mediums erfassen. Insgesamt kann die Erfassungseinrichtung sonach zur Erfassung einer wenigstens einen chemischen und/oder physikalischen Parameter, insbesondere Atmosphäre, Dichte, Druck, Feuchtigkeit, pH-Wert, Temperatur, des Schachtelements und/oder eines innerhalb des durch den Grundkörper begrenzten Hohlraums strömenden Mediums beschreibenden Erfassungsgröße eingerichtet ist, und/oder zur Erfassung einer einen Strömungsparameter eines innerhalb des durch den Grundkörper begrenzten Hohlraums strömenden Mediums beschreibenden Erfassungsgröße eingerichtet ist, und/oder zur Erfassung einer einen Pegel eines innerhalb des durch den Grundkörper begrenzten Hohlraums strömenden Mediums beschreibenden Erfassungsgröße eingerichtet sein.

Zur Erfassung jeweiliger Erfassungsgrößen umfasst die Erfassungseinrichtung typischerweise eine Anzahl an im Hinblick auf die jeweils zu erfassende Erfassungsgröße geeigneten, z. B. messsonden- oder sensorartig ausgebildeten, Erfassungselementen. Die Erfassungselemente können entsprechende Erfassungsgrößen z. B. akustisch, elektrisch, elektromagnetisch oder optisch erfassen. Bei einem Erfassungselement kann es sich demnach z. B. um einen akustischen Sensor, d. h. z. B. einen Ultraschallsensor, einen elektrischen Sensor, d. h. z. B. einen kapazitiven Sensor, einen elektromagnetischen Sensor, d. h. z. B. einen induktiven Sensor, oder einen optischen Sensor, d. h. z. B. eine Kamera, insbesondere eine CCD- oder Infrarotkamera, handeln. Die vorstehende Aufzählung entsprechender Erfassungselemente ist nicht abschließend. Selbstverständlich kann ein und dieselbe Erfassungsgröße vermittels unterschiedlich ausgebildeter Erfassungselemente erfasst werden. Derart ist eine Plausibilisierung vermittels unterschiedlicher Erfassungselemente erfasster Erfassungsgrößen realisierbar.

Die Übertragungseinrichtung ist wenigstens zur Übertragung von von der Erfassungseinrichtung erfassten Erfassungsgrößen, im Allgemeinen Kommunikationssignalen, d. h. insbesondere Daten, an wenigstens einen Kommunikationspartner eingerichtet. Bei einem Kommunikationspartner kann es sich um eine (mobile oder stationäre) weitere Übertragungseinrichtung, z. B. in Form eines Mobiltelefons, Smartphones, Tablet-PCs, Laptops, etc., und/oder um ein globales oder lokales Daten- bzw. Übertragungsnetzwerk (Intranet, Internet) handeln. Typischerweise ist die Übertragungseinrichtung auch zum Empfang von von wenigstens einem Kommunikationspartner übertragenen Kommunikationssignalen eingerichtet. Eine entsprechend eingerichtete Übertragungseinrichtung kann auch als Sende- und/oder Empfangseinrichtung bezeichnet bzw. erachtet werden.

Die Übertragungseinrichtung umfasst zur Übertragung, d. h. zum Senden sowie (gegebenenfalls zum Empfangen) von Kommunikationssignalen geeignete Übertragungselemente (Sende- bzw. Empfangselemente). Ein freies Ende wenigstens eines Übertragungselements kann aus einem freiliegenden Abschnitt, insbesondere einem freiliegenden Stirnflächenabschnitt, des Grundkörpers ragen. Über ein entsprechend freilegendes Ende kann das Übertragungselement Kommunikationssignale an einen Kommunikationspartner übertragen oder an ein weiteres Übertragungselement anschließbar sein.

Die Übertragung entsprechender Kommunikationssignale vermittels eines Übertragungselements kann grundsätzlich drahtgebunden ("wired") oder kabellos ("wireless") erfolgen; zur kabellosen Übertragung kommen grundsätzlich jedwede kabellose Übertragungsarten bzw. -standards in Betracht; lediglich beispielhaft wird auf Bluetooth, GSM, DECT oder im Sub-Gigahertzbereich arbeitende Übertragungsarten bzw. -standards verwiesen. Zur Übertragung kommen auch lizensierte oder lizenzfreie Bänder in Betracht, insbesondere alle ISM-Bänder (engl. Industrial, Scientific and Medical Band). Für ISM-Bänder gilt, dass diese auch zur Übertragung von Audio- und/oder Videodaten verwendet werden können.

Zur drahtlosen Übertragung umfasst die Übertragungseinrichtung wenigstens ein Drahtlosübertragungselement, d. h. insbesondere ein Antennenelement. Bei einem Drahtlosübertragungselement handelt es sich typischerweise um ein längliches, elektrisch leitfähiges Bauelement, welches sich zumindest abschnittsweise durch den Grundkörper erstreckt. Mehrere Drahtlosübertragungselemente können winklig, insbesondere parallel, bezüglich einer Grundkörper(zentral)achse angeordnet sein, sodass sich gegebenenfalls eine flächige Anordnung ergibt. Mehrere Drahtlosübertragungselemente können einander in wenigstens einem Kreuzungspunkt kreuzend angeordnet sein, sodass sich eine flächige, gegebenenfalls gitterartige, Anordnung ergibt. Über die geometrischen Abmessungen sowie die Anordnung und Ausrichtung entsprechender Drahtlosübertragungselemente lassen sich bestimmte Sende- (sowie gegebenenfalls Empfangseigenschaften) der Übertragungseinrichtung realisieren.

Durch die hierin beschriebene Integration einer Erfassungseinrichtung und einer zugeordneten Übertragungseinrichtung ist ein verbessertes Schachtelement gegeben.

Der Erfassungseinrichtung kann eine, insbesondere in zu der Erfassungseinrichtung und der Übertragungseinrichtung entsprechender Weise ebenso in den Grundkörper integrierte, Auswerteeinrichtung zugeordnet sein. Die Auswerteeinrichtung ist zur Auswertung der von der Erfassungseinrichtungseinrichtung erfassten Erfassungsgrößen im Hinblick auf wenigstens ein Auswertungskriterium eingerichtet. Die Auswerteeinrichtung umfasst hierfür im Hinblick auf jeweilige Auswertungskriterien programmierte Auswertealgorithmen. Ein entsprechendes Auswertungskriterium kann eine schachtspezifische Auswertung erfasster Erfassungsgrößen ermöglichen. Hierunter ist eine Auswertung erfasster Erfassungsgrößen im Hinblick auf bestimmte Charakteristika eines Schachtbauwerks bzw. eines in dem Schachtbauwerk befindlichen (fluiden) Mediums zu verstehen. Beispielsweise kann die chemische Zusammensetzung, die Dichte, der Druck, die Temperatur, etc. eines in dem Hohlraum befindlichen bzw. strömenden (fluiden) Mediums im Hinblick auf bestimmte Grenzwerte ausgewertet werden. Denkbar ist auch, dass ein in dem Hohlraum befindliches bzw. strömendes (fluides) Medium qualitativ oder quantitativ im Hinblick auf das Vorhandensein bestimmter chemischer Substanzen, das Über- oder Unterschreiten bestimmter Grenzwerte, insbesondere auch eines Wasserstandgrenzwerts, etc. ausgewertet wird.

Ein entsprechendes Auswertungskriterium kann jedoch auch eine nicht-schachtspezifische Auswertung erfasster Erfassungsgrößen ermöglichen. Hierunter ist eine Auswertung erfasster Erfassungsgrößen im Hinblick auf bestimmte Charakteristika in der Umgebung um das Schachtbauwerk zu verstehen. Beispielsweise kann ein Objekt (unmittelbar) oberhalb des Schachtelements über geeignete der Erfassungseinrichtung zugehörige Erfassungselemente, d. h. z. B. Dehnungs- oder Druckerfassungselemente, welche zweckmäßig umfangsmäßig verteilt in den Grundkörper integriert sind, ermittelt werden, da das Gewicht des Objekts (typischerweise unter der Voraussetzung eines gewissen Mindestgewichts) in dem Schachtelement eine spezielle Kraftverteilung, z. B. Druckverteilung, erzeugt, d. h. sich speziell auf die gegebenen Kräfteverhältnisse, z. B. Druckverhältnisse, in dem Schachtelement auswirkt. In entsprechender Weise können Bewegungen bzw. Bewegungsprofile eines Objekts, gegebenenfalls örtlich, insbesondere richtungsabhängig, und/oder zeitlich aufgelöst, über das Schachtelement erfasst werden.

Konkret kann z. B. ein Verkehrsstrom oberhalb des Schachtelements ermittelt und, gegebenenfalls örtlich, insbesondere richtungsabhängig, und/oder zeitlich aufgelöst, im Hinblick auf bestimmte verkehrstechnische Kenngrößen, d. h. z. B. spezifische Verkehrsteilnehmer, (mittlere) Verkehrsdichte, (mittlere) Verkehrsgeschwindigkeit, etc., kurz im Zusammenhang mit dem Verkehrsfluss stehende verkehrstechnische Kenngrößen ausgewertet werden. Befindet sich das Schachtelement im Bereich eines Eingangs zu einem Gebäude kann über eine entsprechende Auswertung die Anzahl an in das Gebäude eingehender oder aus dem Gebäude ausgehendender Objekte ermittelt werden. Handelt es sich bei dem Gebäude um eine Garage kann z. B. eine Anzahl ein- und ausfahrender Fahrzeuge ermittelt werden.

Auf Grundlage der Auswertung entsprechender Erfassungsgrößen kann die Auswerteeinrichtung zur Erzeugung von Steuergrößen zur Steuerung wenigstens einer steuerbaren technischen Einrichtung eingerichtet sein. Das Schachtelement kann über die Übertragungseinrichtung mit der technischen Einrichtung koppelbar oder gekoppelt sein. Für das vorgenannte Beispiel einer Ermittlung eines in eine Garage einfahrenden Fahrzeugs kann die Auswerteeinrichtung z. B. zur Erzeugung von eine Einfahrtsbeschränkungseinrichtung, d. h. z. B. eine Schranke, ein Tor, etc., aufhebenden (und gegebenenfalls wiederherstellenden) Steuergrößen eingerichtet sein. Entsprechende Steuergrößen können z. B. über die in das Schachtelement integrierte Übertragungseinrichtung an eine der jeweiligen Einfahrtsbeschränkungseinrichtung zugeordnete Empfangseinrichtung übertragen und dort in entsprechende Steuerbefehle für eine Einfahrtsbeschränkung zugeordnete, z. B. motorischen, Aktuatoreinrichtung zur Aufhebung oder Herstellung der Einfahrtsbeschränkung umgewandelt werden. Grundsätzlich denkbar ist auch die Steuerung einer, z. B. akustischen oder optischen, Signalausgabeeinrichtung für den Straßenverkehr, insbesondere einer Verkehrsampel, zur Gabe wenigstens eines, z. B. akustischen und/oder optischen, Fahr- oder Stoppsignals an einen Verkehrsteilnehmer. Im Hinblick auf das vorstehende Beispiel eines in eine Garage ein- oder ausfahrenden Fahrzeugs ist sonach auch die Steuerung einer Signalausgabeeinrichtung zur Gabe eines, z. B. akustischen und/oder optischen, Ein- oder Ausfahrsignals.

Zur elektrischen Versorgung der in das Bauelement integrierten elektrischen bzw. elektronischen Komponenten, d. h. insbesondere der Erfassungseinrichtung und der Übertragungseinrichtung, ist wenigstens eine diesen zugeordnete elektrische Energiespeichereinrichtung, welche zur elektrischen Versorgung wenigstens der Erfassungseinrichtung und/oder der Übertragungseinrichtung eingerichtet ist, wiederum in analoger Weise zu der Erfassungseinrichtung und der Übertragungseinrichtung, in das Schachtelement integriert.

Die Energiespeichereinrichtung kann kabelgebunden oder berührungs- bzw. kabellos, d. h. insbesondere von außerhalb des Verbauorts eines das Schachtelement aufnehmenden Schachtbauwerks, mit elektrischer Energie versorgt, d. h. geladen, werden. Der Energiespeichereinrichtung kann sonach z. B. eine induktive oder kapazitive Ladeeinrichtung zugehörig sein. Es ist derart nicht notwendig, in das das Schachtelement aufnehmende Schachtbauwerk zu steigen, um die Energiespeichereinrichtung mit elektrischer Energie zu versorgen. Die Ladeeinrichtung kann bzw. dieser zugehörige Ladeelemente können räumlich getrennt von der Energiespeichereinrichtung angeordnet sein.

Eine zu der Integration der Erfassungseinrichtung bzw. der Übertragungseinrichtung analoge Integration in den Grundkörper ist selbstverständlich auch für die Auswerteeinrichtung, die Energiespeichereinrichtung und die Ladeeinrichtung möglich.

An oder in einer freiliegenden Fläche des Grundkörpers kann wenigstens ein mit der grundkörperseitig integrierten Übertragungseinrichtung und/oder der grundkörperseitig integrierten Erfassungseinrichtung und/oder einer grundkörperseitig integrierten Auswerteeinrichtung und/oder einer grundkörperseitig integrierten Energiespeichereinrichtung und/oder einer grundkörperseitig integrierten Ladeeinrichtung gekoppeltes Anschlusselement angeordnet oder ausgebildet sein. Das Anschlusselement ist zum Anschluss an ein korrespondierendes Gegenanschlusselement zur Übertragung von Kommunikationssignalen und/oder von Energie auf das korrespondierende Gegenanschlusselement und/oder zum Empfang von von einem mit dem korrespondierenden Gegenanschlusselement gekoppelten Kommunikationspartner übertragenen Kommunikationssignalen und/oder von Energie eingerichtet. Entsprechende Anschlusselemente können z. B. Steckerelemente ausgebildet sein oder solche umfassen. Derart ist eine Kopplung des Schachtelements mit weiteren Einrichtungen, insbesondere weiteren Schachtelementen, möglich.

Die Erfindung betrifft ferner ein Schachtbauwerk. Das Schachtbauwerk kann z. B. einen Teil eines zumindest abschnittsweise oberhalb oder zumindest abschnittsweise unterhalb der Erdoberfläche verlaufenden Ent- oder Versorgungsschachtsystems bilden. Ein Beispiel für ein unterhalb der Erdoberfläche verlaufendes Ent- oder Versorgungsschachtsystem ist eine Kanalisation. Das Schachtbauwerk zeichnet sich dadurch aus, dass es wenigstens ein wenigstens einen Abschnitt des Schachtbauwerks bildendes, wie hierin beschriebenes Schachtelement umfasst. Sämtliche Ausführungen im Zusammenhang mit dem hierin beschriebenen Schachtelement gelten analog für das Schachtbauwerk.

Die Erfindung betrifft darüber hinaus ein Übertragungssystem zur uni- oder multidirektionalen Übertragung von Kommunikationssignalen an wenigstens einen Kommunikationspartner bzw. zwischen mehreren Kommunikationspartnern. Das Übertragungssystem zeichnet sich dadurch aus, dass es wenigstens ein wie beschriebenes Schachtelement umfasst. Sämtliche Ausführungen im Zusammenhang mit dem hierin beschriebenen Schachtelement gelten analog für das Übertragungssystem.

Das Übertragungssystem kann wenigstens zwei miteinander zur Übertragung von Kommunikationssignalen kommunizierende Schachtelemente als (jeweilige) Teile eines oder mehrere Schachtbauwerke umfassen. Das Übertragungssystem kann zur Übertragung von Kommunikationssignalen innerhalb eines Schachtbauwerks und/oder zwischen mehreren Schachtbauwerken eingerichtet sein.

Weitere Vorteile, Merkmale und Einzelheiten der Erfindung ergeben sich aus den in den Zeichnungsfiguren dargestellten Ausführungsbeispielen. Dabei zeigen:
- Fig. 1, 2: je eine schematische Prinzipdarstellung eines Schachtelements gemäß einem Ausführungsbeispiel; und
- Fig. 3: eine Prinzipdarstellung eines Übertragungssystems gemäß einem Ausführungsbeispiel.

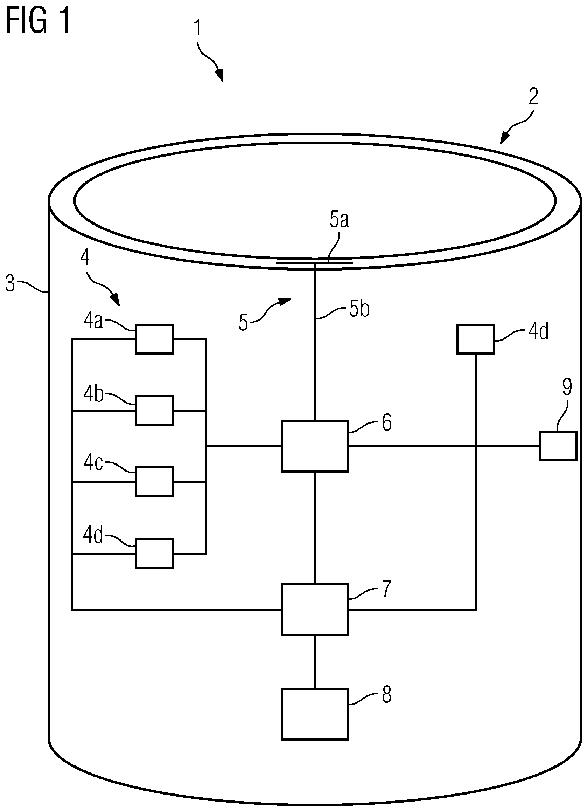

Fig. 1 zeigt eine Prinzipdarstellung eines Schachtelements 1 gemäß einem ersten Ausführungsbeispiel in einer schematischen Ansicht. Das Schachtelement 1 dient der Ausbildung eines Schachtbauwerks 2, welches einen Teil eines Ent- oder Versorgungsschachtsystems, d. h. z. B. einer Kanalisation, bildet. Das Schachtbauwerk 2 kann zumindest abschnittsweise oberhalb oder zumindest abschnittsweise unterhalb der Erdoberfläche angeordnet oder ausgebildet sein.

Das Schachtelement 2 umfasst einen einen Hohlraum begrenzenden Grundkörper 3. Der Grundkörper 3 hat eine hohlzylindrische geometrische Grundform; denkbar wären jedoch auch andere, d. h. z. B. (viel)eckige geometrische Grundformen.

Der Grundkörper 3 kann aus einem, gegebenenfalls aushärtbaren und/oder gießfähigen, Baustoff, z. B. Beton, oder aus einem, insbesondere extrusions- bzw. spritzgießfähigen, thermoplastischen, gegebenenfalls polyolefinischen, Kunststoff, d. h. z. B. PA, PC, PE, PP, PS, gebildet sein.

In den Grundkörper 3 ist eine Erfassungseinrichtung 4 und eine dieser zugeordnete, d. h. mit dieser datenmäßig gekoppelte, Übertragungseinrichtung 5 integriert. Die Erfassungseinrichtung 4 und die Übertragungseinrichtung 5 sind vollständig in der Wandung des Grundkörpers 3 angeordnet und somit baulich mit dem Grundkörper 3 verbunden. Die bauliche Verbindung kann (beschädigungs- bzw. zerstörungsfrei) lösbar bzw. nicht (beschädigungs- bzw. zerstörungsfrei) lösbar sein.

In dem in Fig. 1 gezeigten ersten Fall ist die bauliche Verbindung nicht (beschädigungs- bzw. zerstörungsfrei) lösbar. Die Erfassungseinrichtung 4 bzw. die dieser zugehörigen Erfassungselemente 4a - 4d respektive die Übertragungseinrichtung 5 bzw. die dieser zugehörigen Übertragungselemente 5a, 5b sind (unmittelbar) von dem den Grundkörper 3 bildenden Material umgeben; die Erfassungseinrichtung 4 und die Übertragungseinrichtung 5 wurden im Rahmen der Herstellung des Grundkörpers 3 mit dem den Grundkörper 3 bildenden Material umgossen.

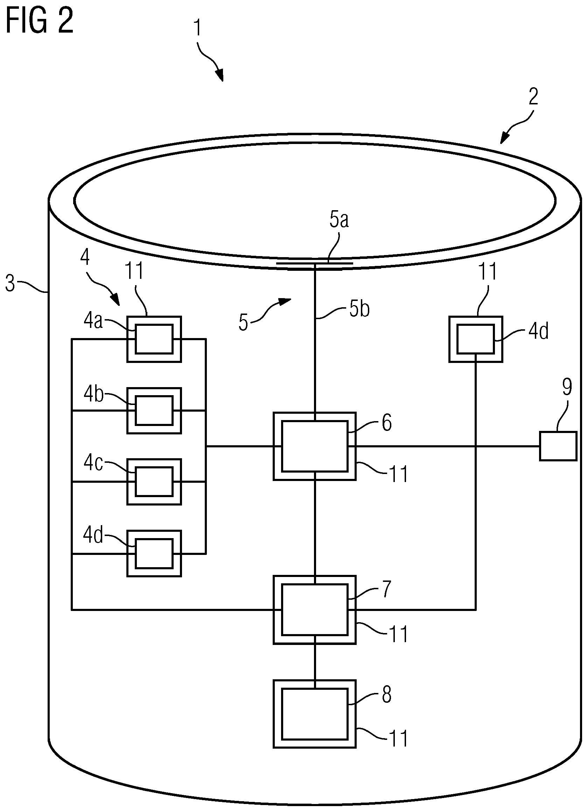

In dem in Fig. 2 gezeigten zweiten Fall ist die Erfassungseinrichtung 4 bzw. die dieser zugehörigen Erfassungselemente 4a - 4d respektive die Übertragungseinrichtung 5 bzw. die dieser Übertragungselemente 5a, 5b in hierfür grundkörperseitig vorgesehenen, insbesondere in einem freiliegenden oder freilegbaren, mithin zugänglichen, Bereich des Grundkörpers 3 angeordneten oder ausgebildeten, durch Ausnehmungen in dem Grundkörper 3 gebildeten, Aufnahmebereichen 11 angeordnet. Die Aufnahmebereiche 11 sind beispielhaft im Bereich einer inneren Mantelfläche des Grundkörpers 3 angeordnet. Denkbar wäre auch eine Anordnung im Bereich einer äußeren Mantelfläche und/oder einer Stirnfläche des Grundkörpers 3. Jeweilige Aufnahmebereiche 11 können über diesen zugeordnete, z. B. klappenartige, Verschlusselemente (nicht gezeigt) (reversibel) verschließbar sein. In dem verschlossenen Zustand sind die in den jeweiligen Aufnahmebereichen 11 aufgenommenen Einrichtungen vor äußeren Einflüssen geschützt, in dem offenen Zustand ist ein Zugriff auf die in den jeweiligen Aufnahmebereichen 11 aufgenommenen Einrichtungen möglich.

Die Erfassungseinrichtung 4 ist zur Erfassung wenigstens einer Erfassungsgröße eingerichtet. Bei der Erfassungsgröße kann es sich um eine chemische und/oder physikalische Größe, d. h. z. B. Atmosphäre, Dichte, Druck, Feuchtigkeit, pH-Wert, Temperatur, etc., des Schachtelements 1 und/oder eines innerhalb des durch den Grundkörper 3 begrenzten Hohlraums bzw. innerhalb des das Schachtelement 1 aufnehmenden Schachtbauwerks 2 befindlichen bzw. strömenden (fluiden) Mediums handeln. Hierfür ist ein erstes messsonden- oder sensorartiges Erfassungselement 4a vorgesehen, welches z. B. eine geeignete Sensorik zur Erfassung der chemischen Zusammensetzung eines in dem Hohlraum befindlichen (fluiden) Mediums, z. B. Gas, umfasst. Die Sensorik kann ein auf eine oder mehrere chemische Substanzen, z. B. Methan, sensibles Sensorelement umfassen.

Für ein in dem Hohlraum strömendes (fluides) Medium, z. B. Abwasser, lassen sich auch Strömungsparameter, d. h. z. B. die Strömungsgeschwindigkeit, erfassen. Hierfür ist ein zweites messsonden- oder sensorartiges Erfassungselement 4b vorgesehen, welches eine geeignete Sensorik z. B. zur Erfassung der Strömungsgeschwindigkeit eines in dem Hohlraum strömenden (fluiden) Mediums, z. B. Abwasser, umfasst. Die Sensorik kann z. B. ein optisches Sensorelement, d. h. z. B. eine Kamera, umfassen.

Bei einer Erfassungsgröße kann es sich auch um einen Pegel (Wasserstand) in dem Hohlraum bzw. in dem das Schachtelement 1 aufnehmenden Schachtbauwerk 2 handeln. Hierfür ist ein drittes messsonden- oder sensorartiges Erfassungselement 4c vorgesehen, welches eine geeignete Sensorik z. B. zur Erfassung des Wasserstands in dem Hohlraum bzw. in dem das Schachtelement 1 aufnehmenden Schachtbauwerk 2 umfasst. Die Sensorik kann z. B. induktive oder kapazitive Sensorelemente umfassen.

Selbstverständlich ist die vorgenannte Aufzählung jeweiliger Erfassungselemente 4a - 4c lediglich beispielhaft; es kann also auch eine andere als die genannte Anzahl an Erfassungselementen 4a - 4c bzw. anders funktionalisierte Erfassungselemente 4a - 4c vorhanden sein. Grundsätzlich können entsprechende Erfassungselemente 4a - 4c entsprechende Erfassungsgrößen z. B. akustisch, elektrisch, elektromagnetisch oder optisch erfassen.

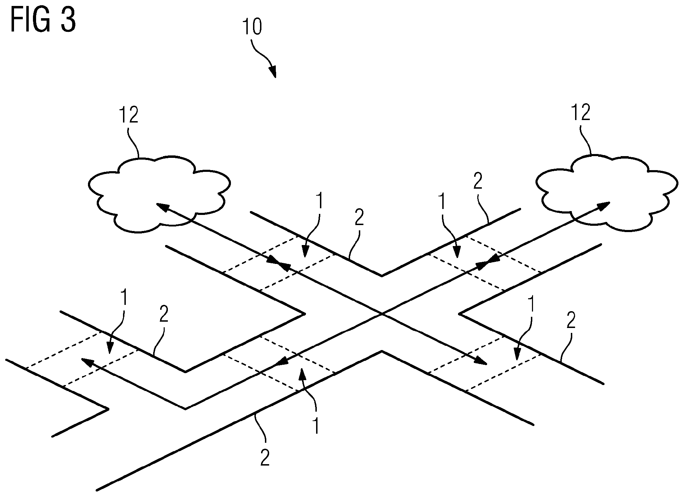

Die Übertragungseinrichtung 5 ist zur Übertragung von von der Erfassungseinrichtung 4 erfassten Erfassungsgrößen, im Allgemeinen Kommunikationssignalen, an wenigstens einen Kommunikationspartner und zum Empfang von wenigstens einem Kommunikationspartner übertragenen Kommunikationssignalen eingerichtet. Bei einem Kommunikationspartner kann es sich um eine (mobile oder stationäre) weitere Übertragungseinrichtung (nicht gezeigt), z. B. in Form eines Mobiltelefons, Smartphones, Tablet-PCs, Laptops, etc., und/oder um ein wie in Fig. 3 durch das Bezugszeichen 12 angedeutetes globales oder lokales Daten- bzw. Übertragungsnetzwerk (Intranet, Internet) handeln.

Die Übertragungseinrichtung 5 umfasst zur Übertragung, d. h. zum Senden sowie zum Empfangen von Kommunikationssignalen geeignete Übertragungselemente 5a, 5b (Sende- bzw. Empfangselemente).

Ein freies Ende eines ersten Übertragungselements 5a kann aus einem freiliegenden Abschnitt, hier einem freiliegenden Stirnflächenabschnitt, des Grundkörpers 3 ragen. Über dieses Übertragungselement 5a können Kommunikationssignale an einen Kommunikationspartner gesendet bzw. von einem Kommunikationspartner gesendete Kommunikationssignale empfangen werden. Bei dem ersten Übertragungselement 5a handelt es sich um ein Antennenelement. Die Übertragung entsprechender Kommunikationssignale vermittels des ersten Übertragungselements 5a erfolgt typischerweise kabellos ("wireless"); zur kabellosen Übertragung kommen grundsätzlich jedwede kabellose Übertragungsarten bzw. -standards in Betracht; lediglich beispielhaft wird auf Bluetooth, GSM, DECT oder im Sub-Gigahertzbereich arbeitende Übertragungsarten bzw. -standards verwiesen. Zur Übertragung kommen auch lizensierte oder lizenzfreie Bänder in Betracht, insbesondere alle ISM-Bänder (engl. Industrial, Scientific and Medical Band).

Das erste Übertragungselement 5a ist mit einem zweiten Übertragungselement 5b verbunden, welches die Verbindung des ersten Übertragungselements 5a mit der Erfassungseinrichtung 4, d. h. den jeweiligen Erfassungselementen 4a - 4d, herstellt. Das zweite Übertragungselement 5b erstreckt sich entsprechend zwischen dem ersten Übertragungselement 5a und den jeweiligen Erfassungselementen 4a - 4d durch den Grundkörper 3.

Ersichtlich ist das zweite Übertragungselement 5b nicht direkt, sondern mittelbar, d. h. unter Zwischenschaltung einer der Erfassungseinrichtung 4 zugeordneten, in zu der Erfassungseinrichtung 4 und der Übertragungseinrichtung 5 entsprechender Weise ebenso in den Grundkörper 3 integrierten Auswerteeinrichtung 6, mit den jeweiligen Erfassungselementen 4a - 4d verbunden.

Die Auswerteeinrichtung 6 ist zur Auswertung der von der Erfassungseinrichtungseinrichtung 5 erfassten Erfassungsgrößen im Hinblick auf wenigstens ein Auswertungskriterium eingerichtet und umfasst hierfür im Hinblick auf jeweilige Auswertungskriterien programmierte Auswertealgorithmen.

Ein entsprechendes Auswertungskriterium kann eine schachtspezifische Auswertung erfasster Erfassungsgrößen ermöglichen. Hierunter ist eine Auswertung erfasster Erfassungsgrößen im Hinblick auf bestimmte Charakteristika des Schachtbauwerks 2 bzw. eines in dem Schachtbauwerk 2 befindlichen bzw. strömenden (fluiden) Mediums zu verstehen. Beispielsweise kann die chemische Zusammensetzung, die Dichte, der Druck, die Temperatur, etc. eines in dem Hohlraum befindlichen bzw. strömenden (fluiden) Mediums im Hinblick auf bestimmte Grenzwerte ausgewertet werden. Denkbar ist auch, dass ein in dem Hohlraum befindliches bzw. strömendes (fluides) Medium qualitativ oder quantitativ im Hinblick auf das Vorhandensein bestimmter chemischer Substanzen, das Über- oder Unterschreiten bestimmter Grenzwerte, insbesondere auch eines Wasserstandgrenzwerts, etc. ausgewertet wird.

Ein entsprechendes Auswertungskriterium kann jedoch auch eine nicht-schachtspezifische Auswertung erfasster Erfassungsgrößen ermöglichen. Hierunter ist eine Auswertung erfasster Erfassungsgrößen im Hinblick auf bestimmte Charakteristika in der Umgebung um das Schachtbauwerk 2 zu verstehen. Beispielsweise kann ein Objekt (unmittelbar) oberhalb des Schachtelements 1 über der Erfassungseinrichtung 4 zugehörige Erfassungselemente 4d, z. B. in Form von Dehnungs- oder Druckerfassungselementen, ermittelt werden, da das durch den Pfeil F dargestellte Gewicht des Objekts in dem Schachtelement 1 eine spezielle Kraftverteilung, z. B. Druckverteilung, erzeugt, d. h. sich speziell auf die gegebenen Kräfteverhältnisse, z. B. Druckverhältnisse, in dem Schachtelement 1 auswirkt. In entsprechender Weise können Bewegungen bzw. Bewegungsprofile eines Objekts, gegebenenfalls örtlich, insbesondere richtungsabhängig, und/oder zeitlich aufgelöst, relativ zu dem Schachtelement 1 erfasst werden. Hierfür sind zweckmäßig mehrere Erfassungselemente 4d umfangsmäßig verteilt in den Grundkörper 3 integriert.

Konkret kann z. B. ein Verkehrsstrom oberhalb des Schachtelements 1 ermittelt und, gegebenenfalls örtlich, insbesondere richtungsabhängig, und/oder zeitlich aufgelöst, im Hinblick auf bestimmte verkehrstechnische Kenngrößen, d. h. z. B. spezifische Verkehrsteilnehmer, (mittlere) Verkehrsdichte, (mittlere) Verkehrsgeschwindigkeit, etc., kurz im Zusammenhang mit dem Verkehrsfluss stehende verkehrstechnische Kenngrößen ausgewertet werden. Befindet sich das Schachtelement 1 im Bereich eines Eingangs zu einem Gebäude kann über eine entsprechende Auswertung die Anzahl an in das Gebäude eingehender oder aus dem Gebäude ausgehendender Objekte ermittelt werden. Handelt es sich bei dem Gebäude um eine Garage kann z. B. eine Anzahl ein- und ausfahrender Fahrzeuge ermittelt werden.

Die Auswerteeinrichtung 6 ist auf Grundlage der Auswertung entsprechender Erfassungsgrößen zur Erzeugung von Steuergrößen zur Steuerung wenigstens einer steuerbaren technischen Einrichtung (nicht gezeigt) eingerichtet sein. Das Schachtelement 1 kann über die Übertragungseinrichtung 5 mit der technischen Einrichtung gekoppelt sein. Für das vorgenannte Beispiel einer Ermittlung eines in eine Garage einfahrenden Fahrzeugs kann die Auswerteeinrichtung 6 z. B. zur Erzeugung von eine Einfahrtsbeschränkungseinrichtung, d. h. z. B. eine Schranke, ein Tor, etc., aufhebenden (und gegebenenfalls wiederherstellenden) Steuergrößen eingerichtet sein. Entsprechende Steuergrößen können über die Übertragungseinrichtung 5 an eine der jeweiligen Einfahrtsbeschränkungseinrichtung zugeordnete Empfangseinrichtung übertragen und dort in entsprechende Steuerbefehle für eine Einfahrtsbeschränkung zugeordnete, z. B. motorischen, Aktuatoreinrichtung zur Aufhebung oder Herstellung der Einfahrtsbeschränkung umgewandelt werden.

Zur elektrischen Versorgung der in das Schachtelement 1 integrierten elektrischen bzw. elektronischen Komponenten ist eine elektrische Energiespeichereinrichtung 7, welche zur elektrischen Versorgung wenigstens der Erfassungseinrichtung 4 und der Übertragungseinrichtung 5 eingerichtet ist, wiederum in analoger Weise zu der Erfassungseinrichtung 4 und der Übertragungseinrichtung 5, in das Schachtelement 1 integriert. Die Energiespeichereinrichtung 7 kann berührungs- bzw. kabellos, d. h. insbesondere von außerhalb des Verbauorts des Schachtbauwerks 2, mit elektrischer Energie versorgt, d. h. geladen, werden. Der Energiespeichereinrichtung 7 ist eine z. B. eine induktive oder kapazitive Ladeeinrichtung 8 zugehörig.

An oder in einer freiliegenden Fläche des Grundkörpers 3 ist ein mit der grundkörperseitig integrierten Übertragungseinrichtung 5 und/oder der grundkörperseitig integrierten Erfassungseinrichtung 4 gekoppeltes Anschlusselement 9, z. B. in Form eines Steckerelements, ausgebildet. Das Anschlusselement 9 ist zum Anschluss an ein korrespondierendes Gegenanschlusselement (nicht gezeigt) zur Übertragung von Kommunikationssignalen auf das korrespondierende Gegenanschlusselement und/oder zum Empfang von von einem mit dem korrespondierenden Gegenanschlusselement gekoppelten Kommunikationspartner übertragenen Kommunikationssignalen eingerichtet. Derart ist eine Kopplung des Schachtelements 1 mit weiteren Einrichtungen, insbesondere weiteren Schachtelementen 1, möglich.

Fig. 3 zeigt eine Prinzipdarstellung eines Übertragungssystems 10 gemäß einem Ausführungsbeispiel. Das Übertragungssystem 10 dient zur uni- oder multidirektionalen Übertragung von Kommunikationssignalen an wenigstens einen Kommunikationspartner. Die Übertragung ist durch die Doppelpfeile angedeutet. Ersichtlich umfasst das Übertragungssystem 10 mehrere miteinander zur Übertragung von Kommunikationssignalen kommunizierende Schachtelemente 1 als (jeweilige) Teile mehrerer Schachtbauwerke 2. Das Übertragungssystem 10 ist zur Übertragung von Kommunikationssignalen innerhalb eines Schachtbauwerks 2 und/oder zur Übertragung von Kommunikationssignalen zwischen mehreren Schachtbauwerken 2 eingerichtet. Selbstverständlich ist das Übertragungssystem 10 auch zur Übertragung von Kommunikationssignalen an ein lokales oder globales Kommunikationsnetzwerk, d. h. z. B. das Internet, 12 eingerichtet.

## Patentansprüche

1. Schachtelement (1) zur Ausbildung wenigstens eines Abschnitts eines Schachtbauwerks (2), umfassend einen einen Hohlraum begrenzenden Grundkörper (3), wobei in den Grundkörper (3) wenigstens eine Erfassungseinrichtung (4), welche zur Erfassung wenigstens einer Erfassungsgröße eingerichtet ist, und eine dieser zugeordnete Übertragungseinrichtung (5), welche zur Übertragung von von der Erfassungseinrichtung (4) erfassten Erfassungsgrößen an wenigstens einen Kommunikationspartner eingerichtet ist, integriert ist, ferner umfassend eine der Erfassungseinrichtung (4) zugeordnete, insbesondere in den Grundkörper integrierte, Auswerteeinrichtung (6), welche zur Auswertung von von der Erfassungseinrichtung (4) erfassten Erfassungsgrößen im Hinblick auf wenigstens ein Auswertungskriterium eingerichtet ist,
**dadurch gekennzeichnet, dass** die
Auswerteeinrichtung (6) auf Grundlage einer im Hinblick auf wenigstens ein Auswertungskriterium ausgewerteten Erfassungsgröße zur Erzeugung von Steuergrößen zur Steuerung wenigstens einer externen Einrichtung eingerichtet ist, umfassend eine wenigstens der Erfassungseinrichtung (4) und/oder der Übertragungseinrichtung (5) zugeordnete elektrische Energiespeichereinrichtung (7), welche zur elektrischen Versorgung der Erfassungseinrichtung (4) und/oder der Übertragungseinrichtung (5) eingerichtet ist, oder wenigstens ein an oder in einer freiliegenden Fläche des Grundkörpers (3) angeordnetes oder ausgebildetes, mit der grundkörperseitig integrierten Übertragungseinrichtung (5) und/oder der grundkörperseitig integrierten Erfassungseinrichtung (4) und/oder der grundkörperseitig integrierten Auswerteeinrichtung (6) gekoppeltes Anschlusselement (9) zum Anschluss an ein korrespondierendes Gegenanschlusselement zur Übertragung von Kommunikationssignalen auf das korrespondierende Gegenanschlusselement und/oder zum Empfang von von einem mit dem korrespondierenden Gegenanschlusselement gekoppelten Kommunikationspartner übertragenen Kommunikationssignalen.

2. Schachtelement nach Anspruch 1, **dadurch gekennzeichnet, dass** die Übertragungseinrichtung (5) zusätzlich zum Empfang von von wenigstens einem Kommunikationspartner übertragenen Kommunikationssignalen eingerichtet ist.

3. Schachtelement nach Anspruch 1 oder 2, **dadurch gekennzeichnet, dass** die Erfassungseinrichtung (5)
- zur Erfassung einer wenigstens einen chemischen und/oder physikalischen Parameter, insbesondere Atmosphäre, Dichte, Druck, Feuchtigkeit, pH-Wert, Temperatur, des Schachtelements und/oder eines innerhalb des durch den Grundkörper (3) begrenzten Hohlraums strömenden Mediums beschreibenden Erfassungsgröße eingerichtet ist, und/oder
- zur Erfassung einer einen Strömungsparameter eines innerhalb des durch den Grundkörper (3) begrenzten Hohlraums strömenden Mediums beschreibenden Erfassungsgröße eingerichtet ist, und/oder
- zur Erfassung einer einen Pegel eines innerhalb des durch den Grundkörper (3) begrenzten Hohlraums strömenden Mediums beschreibenden Erfassungsgröße eingerichtet ist.

4. Schachtelement nach einem der vorhergehenden Ansprüche, **dadurch gekennzeichnet, dass** die Erfassungseinrichtung (4) und/oder die Übertragungseinrichtung (5) und/oder die Auswerteeinrichtung (6) und/oder die Energiespeichereinrichtung (7) lösbar oder unlösbar von diesem in den Grundkörper (3) integriert sind.

5. Schachtelement nach einem der vorhergehenden Ansprüche, **dadurch gekennzeichnet, dass** der Grundkörper (3) aus einem Baustoff, insbesondere Beton, oder aus einem Werkstoff, insbesondere Metall oder Kunststoff, gebildet ist.

6. Schachtbauwerk (2), **dadurch gekennzeichnet, dass** es wenigstens ein wenigstens einen Abschnitt des Schachtbauwerks (2) bildendes Schachtelement (1) nach einem der vorhergehenden Ansprüche umfasst.

7. Übertragungssystem (10) zur Übertragung von Kommunikationssignalen an wenigstens einen Kommunikationspartner, **dadurch gekennzeichnet, dass** es wenigstens ein Schachtelement (1) nach einem der Ansprüche 1 bis 5 umfasst.

8. Übertragungssystem nach Anspruch 7, **dadurch gekennzeichnet, dass** es wenigstens zwei miteinander zur Übertragung von Kommunikationssignalen kommunizierende Schachtelemente (1) nach einem der Ansprüche 1 bis 7 als Teile eines oder mehrere Schachtbauwerke (2) umfasst, wobei das Übertragungssystem (10) zur Übertragung von Kommunikationssignalen innerhalb eines Schachtbauwerks (2) und/oder zwischen mehreren Schachtbauwerken (2) eingerichtet ist.

## Claims

1. Shaft element (1) for forming at least one portion of a shaft structure (2), comprising a cavity limiting base body (3), wherein in the base body (3) at least one detection device (4), which is set up for detecting at least one detection size, and one of these associated transmission means (5), which is set up for transferring detection sizes detected by the detection device (4) to at least one communication partner, is integrated, further comprising an evaluation device (6) assigned to the detection device (4), in particular integrated into the base body, evaluation device (6), which is set up for the evaluation of detection variables detected by the detection device (4) with regard to at least one evaluation criterion, **characterized in that** the evaluation device (6) is based on an evaluation variable evaluated with regard to at least one evaluation criterion for the generation of control variables for controlling at least one external device, comprising at least one of the detection device (4) and / or the transmission device (5) assigned electrical energy storage device (7), which is set up for the electrical supply of the detection device (4) and / or the transmission device (5), or
at least one on or in an exposed surface of the base body (3) arranged or formed, with the base body side integrated transmission means (5) and / or the base body side integrated detection means (4) and / or the base body side integrated evaluation means (6) coupled connection element (9) for connection to a corresponding counter-connection element for transmission of communication signals to the corresponding counter-connection element and / or for receiving from a coupled with the corresponding counter-connection element communication signals transmitted.

2. Shaft element according to claim 1, **characterized in that** the transmission means (5) is arranged in addition to receiving communication signals transmitted from at least one communication partner.

3. Shaft element according to claim 1 or 2, **characterized in that** the detection device (5)
- is set up for detecting at least one chemical and/or physical parameter, in particular atmosphere, density, pressure, humidity, pH value, temperature, the shaft element and/or a medium flowing within the cavity bounded by the base body (3), and/or
- for detecting a flow parameter of a medium flowing within the cavity bounded by the base body (3) descriptive detection variable is set up, and/or
- for detecting a level of a medium flowing within the cavity bounded by the base body (3) descriptive detection size is set up.

4. Shaft element according to any one of the preceding claims, **characterized in that** the detection device (4) and / or the transmission device (5) and / or the evaluation device (6) and / or the energy storage device (7) are detachable or insoluble from this integrated in the basic body (3).

5. Shaft element according to any one of the preceding claims, **characterized in that** the base body (3) is formed of a building material, in particular concrete, or of a material, in particular metal or plastic.

6. Shaft structure (2), **characterized in that** it comprises at least one portion of the shaft structure (2) forming shaft element (1) according to one of the preceding claims.

7. Transmission system (10) for transmitting communication signals to at least one communication partner, **characterized in that** it comprises at least one shaft element (1) according to any one of claims 1 to 5.

8. Transmission system according to claim 7, **characterized in that** it comprises at least two shaft elements (1) communicating with each other for the transmission of communication signals according to one of claims 1 to 7 as parts of one or more shaft structures (2), wherein the transmission system (10) is set up for the transmission of communication signals within a shaft structure (2) and / or between several shaft structures (2).

## Revendications

1. Élément de puits (1) pour la formation d'au moins une section d'un ouvrage de puits (2), comprenant un corps de base délimitant une cavité (3), dans lequel au moins un dispositif de détection (4) est intégré dans le corps de base (3), et un dispositif de transmission (5) associé à celui-ci, conçu pour transmettre à au moins un partenaire de communication les grandeurs de détection détectées par le dispositif de détection (4), ainsi qu'un dispositif d'évaluation (6) associé au dispositif de détection (4), intégré notamment dans le corps de base, conçu pour évaluer les grandeurs de détection détectées par le dispositif de détection (4) en ce qui concerne au moins un critère d'évaluation, **caractérisé en ce que** le dispositif d'évaluation (6) est équipé sur la base d'une grandeur de détection évaluée en ce qui concerne au moins un critère d'évaluation pour produire des grandeurs de commande pour contrôler au moins un dispositif externe, comprenant au moins un dispositif de détection (4) et/ou un dispositif de transmission (5) de stockage d'énergie électrique (7) associé à l'alimentation électrique du dispositif de détection (4) et/ou du dispositif de transmission, ou (5)
au moins un élément de raccordement (9) placé ou formé sur ou dans une surface exposée du corps de base (3), couplé au dispositif de transmission intégré au corps de base (5) et/ou au dispositif de détection intégré au corps de base (4) et/ou au dispositif d'évaluation intégré au corps de base (6), destiné à être raccordé à un élément de contre-raccord correspondant afin de transmettre des signaux de communication à l'élément de contre-raccord correspondant et/ou de recevoir des signaux de communication transmis par un partenaire de communication couplé à l'élément de contre-raccord correspondant.

2. Elément de puits selon la revendication 1, **caractérisé en ce que** le dispositif de transmission (5) est installé en plus de la réception de signaux de communication transmis par au moins un partenaire de communication.

3. Elément de puits selon la revendication 1 ou 2, **caractérisé en ce que** le dispositif de détection (5)
- est conçu pour enregistrer au moins un paramètre chimique et/ou physique, notamment l'atmosphère, la densité, la pression, l'humidité, le pH, la température, l'imbrication et/ou une grandeur de détection descriptive d'un milieu passant à l'intérieur de la cavité délimitée par le corps de base (3), et/ou
- est conçu pour détecter une grandeur de détection descriptive d'un paramètre d'écoulement d'un fluide circulant à l'intérieur de la cavité délimitée par le corps de base (3), et/ou
- est conçu pour détecter une grandeur de détection descriptive d'un niveau d'un milieu circulant à l'intérieur de la cavité délimitée par le corps de base (3).

4. Elément de puits selon l'une quelconque des revendications précédentes, **caractérisé en ce que** le dispositif de détection (4) et/ou le dispositif de transmission (5) et/ou le dispositif d'évaluation (6) et/ou le dispositif de stockage d'énergie (7) sont intégrés de manière soluble ou insoluble par ce dernier dans le corps de base (3).

5. Elément de puits selon l'une quelconque des revendications précédentes, **caractérisé en ce que** le corps de base (3) est constitué d'un matériau de construction, en particulier du béton, ou d'un matériau, en particulier du métal ou du plastique.

6. Structure de puits (2), **caractérisée en ce qu'elle** comprend au moins un élément de puits (1) constituant au moins une section de la structure de puits (2) selon l'une quelconque des revendications précédentes.

7. Système de transmission (10) pour la transmission de signaux de communication à au moins un partenaire de communication, **caractérisé en ce qu'il** comprend au moins un élément de puits (1) selon l'une quelconque des revendications 1 à 5.

8. Système de transmission selon la revendication 7, **caractérisé en ce qu'il** comprend au moins deux éléments de puits (1) communiquant entre eux pour transmettre des signaux de communication selon l'une quelconque des revendications 1 à 7 en tant que parties d'un ou de plusieurs ouvrages de puits (2), le système de transmission (10) étant aménagé pour transmettre des signaux de communication à l'intérieur d'un ouvrage de puits (2) et/ou entre plusieurs ouvrages de puits (2).
